# FASCICULE DE BREVET EUROPEEN

(11) **EP 2 373 973 B1**
(45) Date de publication et mention de la délivrance du brevet: **05.12.2012**
(21) Numéro de dépôt: 09775221.6
(22) Date de dépôt: 17.12.2009
(51) Int. Cl.: G01N 1/32, C23F 1/00

(54) **CELLULE DE DISSOLUTION D'ECHANTILLON SOLIDE COUCHE PAR COUCHE**
ZELLE ZUR SCHICHTWEISEN AUFLÖSUNG EINER FESTEN PROBE
CELL FOR THE LAYER-BY-LAYER DISSOLUTION OF A SOLID SAMPLE

(30) Priorité: 17.12.2008 FR 0858718
(43) Date de publication de la demande: 12.10.2011
(73) Titulaire: Commissariat à l'Énergie Atomique et aux Énergies Alternatives, 75015 Paris (FR)
(72) Inventeur: CHARTIER, Frédéric, F-92260 Fontenay Aux Roses (FR); TABARANT, Michel, F-91120 Palaiseau (FR)
(74) Mandataire: Regimbeau
(86) Numéro de dépôt international: PCT/EP2009/067432
(87) Numéro de publication internationale: WO 2010/070056

(56) Documents cités:
- US-A- 4 544 446
- US-A- 5 271 798
- US-A- 5 783 938
- US-A1- 2001 023 130
- US-A1- 2004 131 783
- US-A1- 2007 278 180

## Description

### DOMAINE TECHNIQUE GENERAL

L'invention concerne le domaine de l'analyse d'échantillons solides, et plus particulièrement le domaine de l'analyse d'échantillons solides couche par couche.

### ETAT DE LA TECHNIQUE

Un procédé classique pour l'analyse d'un échantillon solide consiste en sa mise en solution, et en l'analyse de cette solution.

Cependant, ce procédé ne permet pas une analyse couche par couche de l'échantillon solide.

On connaît de par US 2007/278 180 et US 2008/009 140 une enceinte pour l'analyse couche par couche d'un échantillon solide semi-conducteur. L'enceinte comprend une entrée de réactif gazeux, une source d'électrons et un système de pompage.

L'échantillon solide semi-conducteur est tout d'abord placé à l'intérieur de l'enceinte. L'enceinte est ensuite mise sous vide. Le réactif est introduit à l'intérieur de l'enceinte, et la source d'électrons bombarde des électrons vers une partie déterminée de la surface de l'échantillon. La combinaison du réactif et des électrons permet une attaque de la surface de l'échantillon. Les couches successives sont attaquées jusqu'à une profondeur donnée.

Le produit de l'attaque de l'échantillon est ensuite extrait par le système de pompage avant d'être analysé pour en connaître sa nature.

La mise en oeuvre de ce procédé avec l'utilisation de l'enceinte permet certes de déterminer les différents composants au niveau de la surface du solide ou à différentes profondeurs, mais ne permet pas une analyse d'échantillons en un matériau autre qu'un matériau semi-conducteur.

Également, l'enceinte n'est pas d'encombrement réduit, et l'utilisation du dispositif est malaisée puisqu'il faut créer un vide à l'intérieur de l'enceinte et utiliser une source d'électrons.

Ainsi, ce procédé et l'enceinte sont relativement onéreux.

D'autres dispositifs et procédés pour l'analyse d'échantillons solides sont connus, notamment en ce qui concerne l'analyse élémentaire et/ou isotopique d'un échantillon solide voir aussi US 2001/0023130.

Un exemple d'un tel procédé ne nécessitant pas la dissolution du solide pour une analyse élémentaire à des fins de détermination de la teneur et de la répartition d'un ou plusieurs éléments dans un échantillon solide, est l'analyse par spectrométrie optique, comme la spectrométrie de décharge luminescente (SDL).

Un procédé pour la détermination de l'évolution de la composition isotopique en fonction de la profondeur utilise par exemple la spectrométrie de masse, et plus particulièrement la spectrométrie de masse à décharge luminescente (GDMS).

Cependant, ces procédés connus nécessitent des équipements lourds, complexes, peu répandus sur le marché et onéreux.

Également, ces procédés d'analyse directe sur échantillons solides présentent l'inconvénient de nécessiter des étalons solides indispensables pour effectuer la quantification isotopique ou élémentaire. Or il n'existe que très peu d'étalons solides certifiés selon la concentration et/ou l'isotopie.

Aussi, dans le cas de matériaux multicouches, il n'existe pratiquement pas d'étalons en raison de la complexité de fabrication de ces étalons et du manque de techniques pour les certifier.

### PRESENTATION DE L'INVENTION

L'invention a pour but de pallier au moins un des inconvénients des techniques antérieures exposées ci-dessus.

On propose selon l'invention une cellule de dissolution continue d'un échantillon solide à analyser telle que definie dans la revendication 1.

Un premier avantage de cette cellule de dissolution est qu'elle permet une analyse élémentaire et isotopique d'échantillons solides à l'aide d'une technique d'analyse d'échantillons liquides et permet d'éviter le recours à des méthodes d'analyse directe de solide.

Un autre avantage de cette cellule de dissolution est qu'elle permet d'accéder au coeur de l'échantillon selon une surface plane (que l'on pourrait qualifier de « couche par couche »). Ces niveaux sont plans ainsi qu'ils auraient pu l'être après un usinage mécanique.

Un autre avantage de cette cellule de dissolution est que la vitesse d'érosion de l'échantillon peut être maitrisée en agissant sur le débit, la nature et la concentration du réactif.

Un autre avantage de cette cellule de dissolution est de permettre de s'affranchir de la nécessité de disposer d'étalons solides.

Un autre des avantages de cette cellule de dissolution est son encombrement réduit.

Un autre avantage de cette cellule de dissolution est sa facilité d'utilisation.

Un autre avantage de cette cellule de dissolution est qu'elle n'est pas limitée à un type particulier d'échantillon solide

Un autre avantage de cette cellule de dissolution est son coût de fabrication réduit.

D'autres caractéristiques optionnelles et non limitatives de cette cellule de dissolution sont :
- l'entrée et la sortie sont distinctes et sont chacune un alésage formé à travers le corps et débouchant dans l'évidement ;
- la cellule comprend en outre un dispositif de serrage adapté pour plaquer le corps sur l'échantillon par pression ;
- le corps comprend en outre une gorge en périphérie de l'évidement pour le logement d'un joint torique destiné à être mis en contact avec la surface de l'échantillon et assurant l'étanchéité de la chambre en périphérie de l'évidement ;
- le corps comprend un dispositif anti-bulles adapté pour contrecarrer des effets d'une production de gaz dans la chambre de réaction, la production de gaz étant due à l'attaque chimique de l'échantillon par le réactif ;
- le dispositif anti-bulles est une hélice apte à être mise en rotation autour d'un arbre ;
- la cellule comprend un joint adapté pour assurer l'étanchéité de la cellule au niveau de l'arbre de l'hélice.

On propose selon l'invention également un procédé de dissolution couche par couche d'un échantillon solide à analyser telle que definie dans la revendication 8.

Éventuellement, le procédé comprend en outre l'étape consistant à actionner le dispositif anti-bulles pour contrecarrer des effets d'une production de gaz dans la chambre de réaction, la production de gaz étant due à l'attaque chimique de l'échantillon par le réactif.

### PRESENTATION DES FIGURES

D'autres caractéristiques, buts et avantages apparaîtront à la lecture de la description qui suit en référence aux dessins donnés à titre illustratif et non limitatif et parmi lesquels :
- la figure 1 est une coupe schématique d'une cellule de dissolution selon l'invention ;
- la figure 2 est un schéma représentant la cellule en situation d'utilisation avec un réservoir de réactif et un dispositif d'injection ;
- la figure 3 est un graphe représentant la profondeur attaquée de l'échantillon solide par le réactif ; et
- la figure 4 est un schéma représentant les étapes d'un procédé selon l'invention.

### DESCRIPTION DETAILLEE

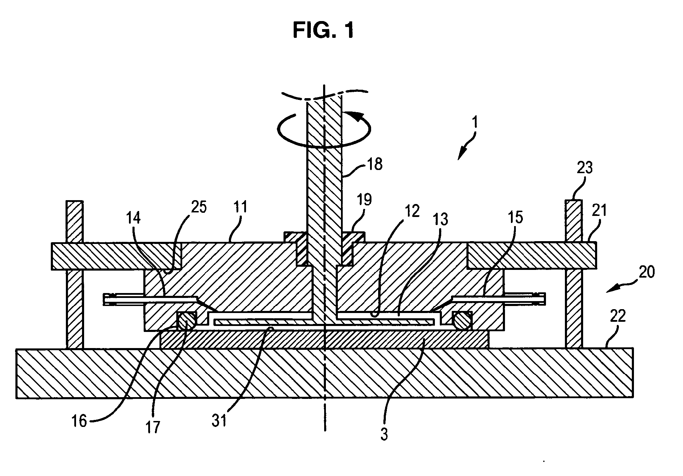

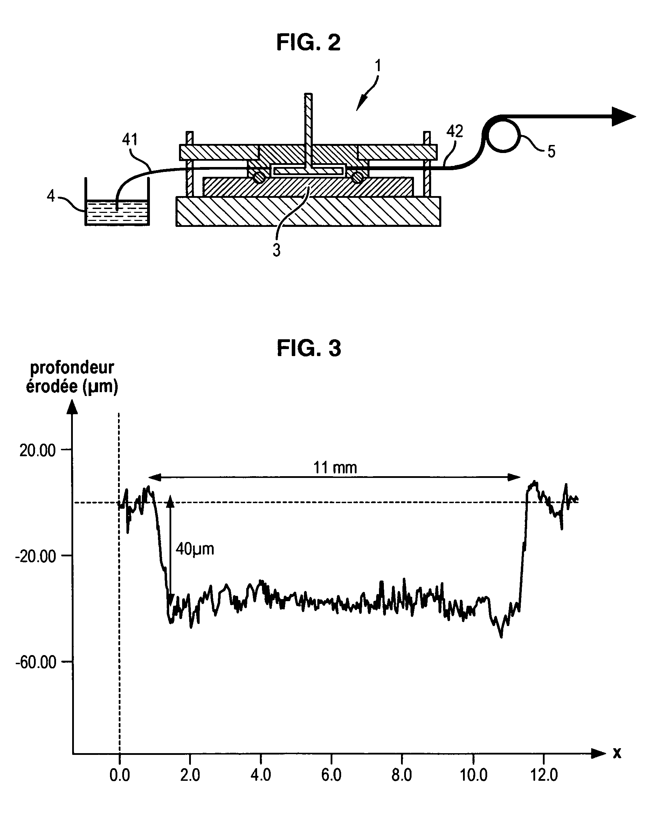

Les figures 1 et 2 représentent schématiquement un mode de réalisation possible d'une cellule de dissolution 1 continue, d'un échantillon 3 solide à analyser selon l'invention.

La cellule de dissolution 1 comporte un corps 11, adapté pour venir en contact avec une surface 31 de l'échantillon 3 à analyser.

Le corps 11 comprend principalement un évidement 12 apte à former, en combinaison avec la surface 31 de l'échantillon 3, une chambre 13 de réaction.

Il comporte également au moins une entrée 14 pour introduire un réactif chimique dans la chambre 13 de réaction 1, le réactif chimique étant apte à attaquer chimiquement l'échantillon 3 à partir du niveau de sa surface 31 sur une épaisseur contrôlée et avec une vitesse d'attaque réglable et à former un produit de réaction.

L'épaisseur attaquée dépend alors de la nature de l'échantillon, de la nature du réactif et de la concentration du réactif. A titre d'illustration, la figure 3 montre un cratère obtenu dans un échantillon d'acier attaqué par de l'acide nitrique à une concentration de 0,1 mol/L pendant 60 minutes à un débit de 1 mL/min. On peut remarquer l'homogénéité de l'attaque de l'échantillon. Les dimensions du cratère dans ces conditions sont de 11 mm de diamètre pour une profondeur de l'ordre de 40 µm. La vitesse d'érosion dépend, de plus, du débit du réactif. On peut alors atteindre le matériau à analyser en profondeur, par couches successives.

Le corps 11 comporte également au moins une sortie 15 pour extraire le réactif chimique et le produit de réaction hors de la chambre 13 de réaction, pour l'analyse couche par couche de l'échantillon 3, comme on l'expliquera dans la suite de la présente description.

La cellule 1 et notamment son corps 11 ont des dimensions adaptées à l'échantillon 3 solide à analyser, ainsi qu'au type d'analyse que l'on souhaite effectuer.

Par exemple, le corps 11 est cylindrique de révolution. Il peut ainsi être un cylindre droit de diamètre extérieur de 23 mm et dont l'évidement est également circulaire de diamètre 15 mm.

Le corps 11 de la cellule 1 d'analyse est réalisé dans un matériau inerte vis-à-vis du réactif utilisé pour l'attaque des échantillons 3 solides. Par exemple, si le réactif est un acide minéral ou comprend au moins un acide minéral, du plexiglas peut être utilisé pour la fabrication du corps.

Le réactif peut correspondre à un seul composé chimique. Le réactif peut aussi correspondre à un mélange de composés chimiques.

L'entrée du réactif dans la chambre 13 de réaction peut être assurée par un dispositif d'injection 5 permettant d'injecter un flux continu et de débit constant. Le dispositif d'injection 5 peut être une pompe péristaltique.

La sortie du réactif de la chambre 13 de réaction peut être reliée à un dispositif d'extraction de la chambre de réaction de la cellule 1 et d'introduction de liquide dans un dispositif d'analyse. Ce dispositif d'extraction et d'introduction peut être relié à un nébuliseur pour un spectromètre optique, un spectromètre de masse à source plasma ou un spectromètre d'absorption atomique.

Un tube 41 de connexion d'entrée peut être prévu pour relier un réservoir 4 de réactif à l'entrée 14. Un tube 42 de connexion de sortie peut être prévu pour relier la sortie 15 au dispositif d'extraction et d'introduction. Le tube 41 de connexion d'entrée et/ou le tube 42 de connexion de sortie sont avantageusement de section réduite afin de ne pas dégrader la résolution spatiale obtenue par attaque progressive de l'échantillon solide, notamment lors de l'entrée du réactif dans la chambre 13 de réaction.

L'attaque de l'échantillon 3 solide par le réactif peut être contrôlée. C'est-à-dire qu'il est possible, avec une telle cellule de dissolution 1, de contrôler à chaque instant l'épaisseur de la couche d'échantillon attaquée, par exemple, en réglant le dispositif d'injection afin de déterminer un débit de réactif donné et/ou en choisissant le réactif adéquat ainsi que sa concentration.

La cellule de dissolution 1 peut être avantageusement utilisée dans le domaine de l'analyse physico-chimique. Elle permet la caractérisation de la composition élémentaire et/ou isotopique de l'échantillon 3 solide. Cette caractérisation peut être effectuée soit en surface, soit en profondeur.

L'analyse de la composition élémentaire permet de déterminer les éléments composant l'échantillon solide ainsi que leur teneur et/ou leur répartition selon les couches de l'échantillon 3. Ceci est possible, par exemple, en associant l'utilisation de la cellule de dissolution 1 selon l'invention avec une méthode d'analyse en phase liquide, comme la spectrométrie optique à source à plasma à couplage inductif, l'absorption atomique et la spectrométrie de masse à source à plasma à couplage inductif.

L'analyse de la composition isotopique permet de déterminer le ou les isotope(s) d'un ou plusieurs élément(s) présent dans l'échantillon 3 solide, pour par exemple déterminer l'évolution de la teneur en un ou plusieurs isotopes d'un élément donné en fonction de la profondeur dans l'échantillon solide à partir de la surface. Pour cette analyse, l'utilisation de la cellule selon l'invention est avantageusement couplée avec une méthode d'analyse isotopique en phase liquide, comme par exemple la spectrométrie de masse à source à plasma à couplage inductif.

Cette cellule permet également l'étude du comportement réactif de l'échantillon solide lorsque la cellule est utilisée en combinaison d'une analyse du produit de réaction. Cette analyse du produit de réaction peut être effectuée en phase liquide.

L'évidement 12 est de profondeur relativement faible par rapport à une plus grande dimension caractéristique de la surface 31 attaquée de l'échantillon 3. On entend par une plus grande dimension caractéristique de la surface, la plus grande distance entre deux points de la surface 31. Par exemple, si la surface est un disque, la plus grande dimension caractéristique est le diamètre du cercle délimitant le disque. Le rapport de la plus grande dimension sur la profondeur de l'évidement est compris entre 20 et 100. Ainsi, le réactif est concentré au voisinage de la surface à attaquer.

Selon un premier mode de réalisation, l'entrée 14 et la sortie 15 sont distinctes et sont chacune un alésage formé à travers le corps 11 et débouchant dans l'évidement 12. La cellule peut alors fonctionner en mode statique.

Selon une variante, l'entrée 14 et la sortie 15 sont confondues et correspondent à un seul alésage formé à travers le corps 11 et débouchant dans l'évidement 12

Le corps 11 peut comprendre en outre une gorge 16 en périphérie de l'évidement 12 pour le logement d'un joint torique 17 destiné à être mis en contact avec la surface 31 de l'échantillon 3 et assurant l'étanchéité de la chambre 13 en périphérie de l'évidement 12.

Cette gorge 16 peut être usinée dans le corps 11.

Afin d'améliorer davantage l'étanchéité, la cellule 1 comprend en plus un dispositif de serrage 20 adapté pour plaquer le corps 11 sur l'échantillon 3 par pression. A cet effet, le corps 11 peut comprendre un retrait 25 au niveau de sa périphérie pour le logement du dispositif de serrage 20.

Le dispositif de serrage 20 peut comprendre des plaques dont au moins une 21 vient se loger dans le retrait 25 et au moins une autre 22 est positionnée sous l'échantillon 3, ainsi que des tiges filetées 23 reliant ces plaques 21, 22 et assurant un serrage par vissage.

Le corps 11 peut encore comprendre un dispositif anti-bulles 18 adapté pour contrecarrer des effets d'une production de gaz dans la chambre 13 de réaction, la production de gaz étant due à l'attaque chimique de l'échantillon 3 par le réactif.

Le dispositif anti-bulles 18 peut être une hélice apte à être mise en rotation autour d'un arbre. Cette hélice est réalisée dans un matériau inerte au réactif utilisé. Elle est insérée dans l'évidement 12.

Un moteur relié à l'arbre de l'hélice 18 permet de mettre celle-ci en mouvement de rotation. La rotation de l'hélice 18 permet d'éviter la formation de bulles due à l'attaque chimique de l'échantillon 3 solide. Elle permet également d'assurer une attaque homogène de l'échantillon.

Lorsque le corps 11 comprend une hélice 18, il peut comprendre un joint 19 adapté pour assurer l'étanchéité de la cellule au niveau de l'arbre de l'hélice. Ce joint 19 est utilisé comme presse-étoupe.

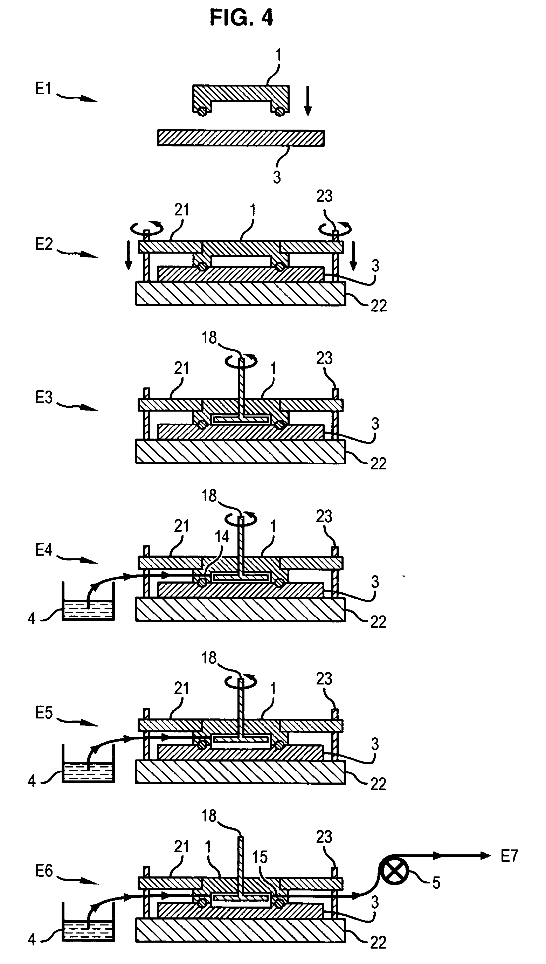

Un procédé de dissolution, couche par couche, d'un échantillon solide à analyser possible selon l'invention comprend les étapes consistant à (voir figure 4) :
- placer E1 une cellule 1, dans laquelle est éventuellement inséré un dispositif anti-bulles 18, sur une surface 31 d'un échantillon 3 solide à analyser, l'évidement 12 étant tourné vers l'échantillon 3 ;
- maintenir E2 la cellule 1, avec le cas échéant le dispositif anti-bulles 18, sur l'échantillon 3 par pression ;
- introduire E4 le réactif dans la chambre 13 de réaction par l'entrée 14, le réactif, une fois dans la chambre 13 de réaction, attaquant de façon continue E5 l'échantillon 3 à partir du niveau de sa surface 31 et formant un produit de réaction;
- extraire E6 le réactif et le produit de réaction hors de la chambre 13 de réaction par la sortie 15,
- analyser E7 le réactif et le produit de réaction, pour analyser couche par couche l'échantillon 3.

Le procédé peut être réalisé avec des débits de réactif différents, par exemple de quelques dizaines de µL/min à quelques mL/min. Le débit est choisi en fonction de la taille de la cellule de dissolution 1 utilisée, de la nature et de la concentration du réactif utilisé.

Il est alors possible d'analyser des échantillons 3 solides de quelques micromètres à plusieurs centaines de micromètres de profondeur selon la nature des matériaux et des liquides d'attaque utilisés.

Le procédé peut également être réalisé de manière statique par injection manuelle du réactif d'attaque dans la chambre 13 de réaction et prélèvement du réactif et du produit formé après attaque pour analyse.

Le procédé peut comprendre en outre l'étape consistant à actionner E3 un dispositif anti-bulles 18 pour contrecarrer des effets d'une production de gaz dans la chambre 13 de réaction, la production de gaz étant due à l'attaque chimique de l'échantillon 3 par le réactif.

Les applications de la cellule 1 et du procédé selon l'invention concernent la caractérisation des éléments majeurs, mineurs et à l'état de traces compris dans l'échantillon 3 solide (concentration, masse, répartition par exemple) ainsi que l'analyse isotopique des éléments constitutifs de l'échantillon 3 solide. Ils peuvent encore servir :
- à l'étude du comportement de la surface de l'échantillon ;
- au suivi de la cinétique de dissolution de l'échantillon solide ;
- à l'analyse de la résistance de l'échantillon solide à la corrosion par un réactif chimique agressif ; et
- au suivi de la migration d'éléments à travers l'échantillon 3 solide pendant la fabrication de cet échantillon.

Ils permettent l'analyse d'échantillons solides en matériaux multicouches (tels que les revêtements multicouches), de suivre des traitements de surface et/ou de nettoyage et de décontamination de surface.

Enfin, ils peuvent également être appliqués à la caractérisation de molécules liées ou greffées sur des substrats solides.

## Revendications

1. Cellule de dissolution (1) continue d'un échantillon (3) solide à analyser, comportant un corps (11), adapté pour venir en contact avec une surface (31) de l'échantillon (3), comprenant
un évidement (12); apte à former, en combinaison avec la surface (31) de l'échantillon (3), une chambre (13) de réaction;
au moins une entrée (14) pour introduire un réactif chimique dans la chambre de réaction (13), le réactif chimique étant apte à attaquer chimiquement l'échantillon (3) à partir du niveau de sa surface (31), sur une épaisseur contrôlée, avec une vitesse d'attaque réglable, et à former un produit de réaction ;
au moins une sortie (15) pour extraire le réactif chimique et le produit de réaction hors de la chambre (13) de réaction ;
**caractérisée en ce que** l'évidement (12) possède une profondeur relativement faible par rapport à une plus grande dimension caractéristique de la surface (31) attaquée de l'échantillon (3)
le rapport de la plus grande dimension sur la profondeur de l'évidement est compris entre 20 et 100 permettant une analyse couche par couche de l'échantillon.

2. Cellule (1) selon la revendication 1, dans laquelle l'entrée (14) et la sortie (15) sont distinctes et sont chacune un alésage formé à travers le corps (11) et débouchant dans l'évidement (12).

3. Cellule (1) selon l'une des revendications 1 à 2, comprenant en outre un dispositif de serrage (20) adapté pour plaquer le corps (11) sur l'échantillon (3) par pression.

4. Cellule (1) selon l'une des revendications 1 à 3, dans laquelle le corps (11) comprend en outre une gorge (16) en périphérie de l'évidement (12) pour le logement d'un joint torique (17) destiné à être mis en contact avec la surface (31) de l'échantillon (3) et assurant l'étanchéité de la chambre (13) en périphérie de l'évidement (12).

5. Cellule (1) selon l'une des revendications 1 à 4, dans laquelle le corps (11) comprend un dispositif anti-bulles (18) adapté pour contrecarrer des effets d'une production de gaz dans la chambre (13) de réaction, la production de gaz étant due à l'attaque chimique de l'échantillon (3) par le réactif.

6. Cellule (1) selon la revendication 5, dans laquelle le dispositif anti-bulles (18) est une hélice apte à être mise en rotation autour d'un arbre.

7. Cellule selon la revendication 6, comprenant en outre un joint (19) adapté pour assurer l'étanchéité de la cellule au niveau de l'arbre de l'hélice.

8. Procédé de dissolution couche par couche d'un échantillon (3) solide à analyser, **caractérisé en ce qu'**il comprend les étapes consistant à :
- placer (E1) une cellule (1) selon l'une des revendications 1 à 7, dans laquelle est éventuellement inséré un dispositif anti-bulles (18), sur une surface (31) d'un échantillon (3) solide à analyser, l'évidement (12) étant tourné vers l'échantillon (3);
- maintenir (E2) la cellule (1), avec le cas échéant le dispositif anti-bulles (18), sur l'échantillon (3) par pression ;
- introduire (E4) le réactif dans la chambre (13) de réaction par l'entrée (14), le réactif, une fois dans la chambre (13) de réaction, attaquant de façon continue (E5) l'échantillon (3) à partir du niveau de sa surface (31) et formant un produit de réaction;
- extraire (E6) le réactif et le produit de réaction hors de la chambre (13) de réaction par la sortie (15),
- analyser (E7) le réactif et te produit de réaction, pour analyser couche par couche l'échantillon(3).

9. Procécé selon la revendication 8, comprenant en outre l'étape consistant à actionner (E3) le dispositif anti-bulles (18) pour contrecarrer des effets d'une production de gaz dans la chambre (13) de réaction, la production de gaz étant due à l'attaque chimique de l'échantillon (3) par le réactif.

## Claims

1. Cell (1) for continuous dissolution of a solid sample (3) to be analysed, comprising a body (11) adapted to be brought into contact with a surface (31) of the sample (3), including
a recess (12) capable of forming a reaction chamber (13) in combination with the surface (31) of the sample (3) ;
at least one inlet (14) for feeding a chemical reagent into the reaction chamber (13), the chemical reagent being capable of chemically etching the sample (3) from the surface (31) thereof, over a controlled thickness, and at an adjustable etching rate, and of forming a reaction product;
at least one outlet (15) for extracting the chemical reagent and the reaction product out of the reaction chamber (13);
**characterised in that** the recess (12) has a relatively low depth compared to a largest dimension characteristic of the etched surface (31) of the sample (3);
the ratio of the largest dimension over the depth of the recess is comprised between 20 and 100 enabling a layer-by-layer analysis of the sample.

2. Cell (1) according to claim 1, in which the inlet (14) and the outlet (15) are distinct and are each a bore formed through the body (11) and emerging in the recess (12);

3. Cell (1) according to one of claims 1 to 2, moreover comprising a tightening device (20) adapted to press the body (11) against the sample (3) through pressure.

4. Cell (1) according to one of claims 1 to 3, in which the body (11) moreover comprises a groove (16) in the periphery of the recess (12) to accommodate an O-ring seal (17) intended to be brought into contact with the surface (31) of the sample (3) and assuring the sealing of the chamber (13) in the periphery of the recess (12).

5. Cell (1) according to one of claims 1 to 4, in which the body (11) comprises an anti-bubble device (18) adapted to counteract the effects of a production of gas inside the reaction chamber (13), said production of gas being due to the chemical etching of the sample (3) by the reagent.

6. Cell (1) according to claim 5, in which the anti-bubble device (18) is an impeller able to be placed in rotation around a shaft.

7. Cell according to claim 6, moreover comprising a seal (19) adapted to assure the sealing of the cell at the shaft of the impeller.

8. Method for the layer-by-layer dissolution of a solid sample (3) to be analysed, **characterised in that** it comprises the steps following :
- placing (E1) a cell (1) according to one of claims 1 to 7, in which an anti-bubble device (18) is potentially inserted, onto a surface (31) of a solid sample (3) to be analysed, the recess (12) facing the sample (3);
- maintaining (E2) the cell (1), with if appropriate the anti-bubble device (18), on the sample (3) through pressure;
- feeding (E4) the reagent into the reaction chamber (13) via the inlet (14), the reagent, once in the reaction chamber (13), continuously etching (E5) the sample (3) from the surface (31) thereof and forming a reaction product;
- extracting (E6) the reagent and the reaction product from the reaction chamber (13) via the outlet (15);
- analysing (E7) the reagent and the reaction product, to analyse the sample (3) layer-by-layer.

9. Method according to claim 8, moreover comprising the step of actuating (E3) the anti-bubble device (18) for counteracting the effects of a production of gas inside the reaction chamber (13), said production of gas being due to the chemical etching of the sample (3) by the reagent.

## Patentansprüche

1. Zelle (1) zum kontinuierlichen Auflösen einer zur analysierenden Feststoffprobe (3), mit einem Körper (11), der mit einer Oberfläche (31) der Probe (3) in Kontakt zu gelangen vermag und der umfasst:
- eine Aushöhlung (12), die zusammen mit der Oberfläche (31) der Probe (3) eine Reaktionskammer (13) zu bilden vermag;
- wenigstes einen Einlass (14) zum Einleiten eines chemischen Reagens in die Reaktionskammer (13), wobei das chemische Reagens die Probe (3) vom Niveau ihrer Oberfläche (31) aus über eine kontrollierte Dicke mit einer einstellbaren Angriffsgeschwindigkeit chemisch anzugreifen und ein Reaktionsprodukt zu bilden vermag;
- wenigstens einen Auslass (15) zum Ableiten des chemischen Reagens und des Reaktionsprodukts aus der Reaktionskammer (13);
**dadurch gekennzeichnet, dass** die Aushöhlung (12) bezüglich einer größten charakteristischen Abmessung der angegriffenen Oberfläche (31) der Probe (3) eine relativ geringe Tiefe aufweist,
wobei das Verhältnis der größten Abmessung zur Tiefe der Aushöhlung zwischen 20 und 100 liegt, wodurch eine schichtweise Analyse der Probe möglich ist.

2. Zelle (1) nach Anspruch 1,
bei der der Einlass (14) und der Auslass (15) voneinander getrennt sind und jeweils eine durch den Körper (11) hindurch ausgebildete und in die Aushöhlung (12) mündende Bohrung sind.

3. Zelle (1) nach einem der Ansprüche 1 bis 2,
die ferner eine Klemmvorrichtung (20) aufweist, die den Körper (11) durch Druck auf die Probe (3) zu pressen vermag.

4. Zelle (1) nach einem der Ansprüche 1 bis 3,
bei der der Körper (11) ferner am Rand der Aushöhlung (12) eine Nut (16) zur Aufnahme eines O-Rings (17) aufweist, der mit der Oberfläche (31) der Probe (3) in Kontakt gelangen soll und die Dichtheit der Kammer (13) am Rand der Aushöhlung (12) gewährleistet.

5. Zelle (1) nach einem der Ansprüche 1 bis 4,
bei der der Körper (11) eine Entschäumungsvorrichtung (18) aufweist, die den Auswirkungen einer Gasentstehung in der Reaktionskammer (13) entgegenwirken soll, wobei die Gasentstehung auf dem chemischen Angriff der Probe (3) durch das Reagens beruht.

6. Zelle (1) nach Anspruch 5,
bei der die Entschäumungsvorrichtung (18) eine Schraube ist, die um eine Welle herum in Drehung versetzt zu werden vermag.

7. Zelle (1) nach Anspruch 6,
die ferner eine Dichtung (19) umfasst, die die Dichtheit der Zelle an der Welle der Schraube zu gewährleisten vermag.

8. Verfahren zum schichtweisen Auflösen einer zu analysierenden Feststoffprobe (3),
**dadurch gekennzeichnet, dass** es folgende Schritte umfasst:
- Anbringen (E1) einer Zelle (1), in die gegebenenfalls eine Entschäumungsvorrichtung (18) eingesetzt ist, nach einem der Ansprüche 1 bis 7 auf einer Oberfläche (31) einer zu analysierenden Feststoffprobe (3), wobei die Aushöhlung (12) der Probe (3) zugewandt ist;
- Halten (E2) der Zelle (1) mit gegebenenfalls der Entschäumungsvorrichtung (18) auf der Probe (3) durch Druck;
- Einleiten (E4) des Reagens in die Reaktionskammer (13) durch den Einlass (14), wobei das Reagens, sobald dieses sich in der Reaktionskammer (13) befindet, die Probe (3) vom Niveau ihrer Oberfläche (31) aus kontinuierlich (E5) angreift und ein Reaktionsprodukt bildet;
- Ableiten (E6) des Reagens und des Reaktionsprodukts durch den Auslass (15) aus der Reaktionskammer (13);
- Analysieren (E7) des Reagens und des Reaktionsprodukts zur schichtweisen Analyse der Probe (3).

9. Verfahren nach Anspruch 8,
das ferner den Schritt zum Betätigen (E3) der Entschäumungsvorrichtung (18) umfasst, um den Auswirkungen einer Gasentstehung in der Reaktionskammer (13) entgegenzuwirken, wobei die Gasentstehung auf dem chemischen Angriff der Probe (3) durch das Reagens beruht.
